# EUROPEAN PATENT APPLICATION

(11) **EP 2 587 061 A2**
(43) Date of publication of application: **01.05.2013**
(21) Application number: 12190092.2
(22) Date of filing: 26.10.2012
(51) Int. Cl.: F04B 39/12, F04B 39/14, F04C 23/00, H02K 11/00

(54) **Motor-driven compressor**

(30) Priority: 31.10.2011 JP 2011239309
(71) Applicant: Kabushiki Kaisha Toyota Jidoshokki, Kariya-shi, Aichi 448-8671 (JP)
(72) Inventor: Suitou, Ken, Kariya-shi, Aichi 448-8671 (JP); Enami, Shingo, Kariya-shi, Aichi 448-8671 (JP); Yamaguchi, Tsuyoshi, Kariya-shi, Aichi 448-8671 (JP)
(74) Representative: TBK

(57) **Abstract**

A motor-driven compressor includes a housing, an inverter assembly and an elastic member. The inverter assembly has a base member, a circuit board and an electronic component. The base member has a base portion and a sidewall portion that extends from the base portion toward the housing and is mounted on the housing. The circuit board is disposed in a space of the base member. The electronic component is mounted on a surface of the circuit board adjacent to the housing. The sidewall portion extends beyond an imaginary plane including the surface of the circuit board. The elastic member having heat conductivity is located between the circuit board and the base portion, between the circuit board and the sidewall portion, and over the surface of the circuit board so that the circuit board is embedded in the elastic member. A space is formed between the elastic member and the housing.

## Description

### BACKGROUND OF THE INVENTION

The present invention relates to a motor-driven compressor and more particularly to a motor-driven compressor having an inverter assembly.

Generally, a common motor-driven compressor includes a compression mechanism that compresses a refrigerant, an electric motor that drives the compression mechanism, and an inverter assembly that controls rotation of the electric motor. The inverter assembly has therein a circuit board on which electronic components of an inverter circuit are mounted.

Japanese Unexamined Patent Application Publication No. 2004-251161 discloses an inverter assembly that includes a sidewall portion formed on the surface of the housing of the motor-driven compressor and a cover member that is provided separately from the housing. In this Publication wherein a circuit board on which electronic components are mounted is mounted to the cover member and then the cover member is joined to the sidewall portion formed on the surface of the housing, the cover member protects the electronic components and the circuit board.

The electronic components and the circuit board, which form an inverter circuit, are more susceptible to damage than mechanical or electrical parts such as compression mechanism or electric motor. During assembling of the motor-driven compressor, foreign matters such as dust may be attached to or any shock be applied to the electronic components and the circuit board, thereby inviting damage.

Although the above-described inverter assembly of the Publication may be one solution to the attachment of foreign matters or the damage to the electronic components and the circuit board in assembling of the motor-driven compressor, the lead wires of the electronic components and the surface of the circuit board remain exposed after the electronic components and the circuit board have been mounted to the cover member, which makes it difficult to successfully prevent the attachment of foreign matters or the damage to the lead wires of the electronic components and the surface of the circuit board.

The present invention, which has been made in light of the above problem, is directed to providing a motor-driven compressor having an inverter assembly that prevents the attachment of foreign matters or the damage to the electronic components and the circuit board in assembling of the motor-driven compressor.

### SUMMARY OF THE INVENTION

In accordance with an aspect of the present invention, there is provided a motor-driven compressor that includes a compression mechanism, an electric motor, a housing, an inverter assembly and an elastic member. The compression mechanism compresses a refrigerant. The electric motor drives the compression mechanism. The housing accommodates the compression mechanism and the electric motor. The inverter assembly controls rotation of the electric motor. The inverter assembly has a base member, a circuit board and an electronic component. The base member has a base portion and a sidewall portion that extends from the base portion toward the housing and is mounted on the housing. The base member has therein a space. The circuit board is disposed in the space of the base member. The electronic component is mounted on a surface of the circuit board adjacent to the housing. The sidewall portion of the base member extends beyond an imaginary plane that includes the surface of the circuit board. The elastic member having heat conductivity is located between the circuit board and the base portion of the base member, between the circuit board and the sidewall portion, and also over the surface of the circuit board so that the circuit board is embedded in the elastic member. A space is formed between the elastic member and the housing.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a longitudinal sectional view showing a motor-driven compressor according to a first embodiment of the present invention;
Fig. 2 is a schematic sectional view showing the internal structure of an inverter assembly of the motor-driven compressor of Fig. 1;
Figs. 3A through 3C are schematic sectional views illustrating a method of assembling the inverter assembly of the motor-driven compressor;
Fig. 3D is a schematic sectional view illustrating a method of mounting the inverter assembly to a housing of the motor-driven compressor;
Fig. 4 is a schematic sectional view showing the internal structure of an inverter assembly of a motor-driven compressor according to a second embodiment of the present invention; and
Fig. 5 is a schematic sectional view showing the internal structure of an inverter assembly of a motor-driven compressor according to another embodiment of the present invention.

### DETAILED DESCRIPTION OF THE EMBODIMENTS

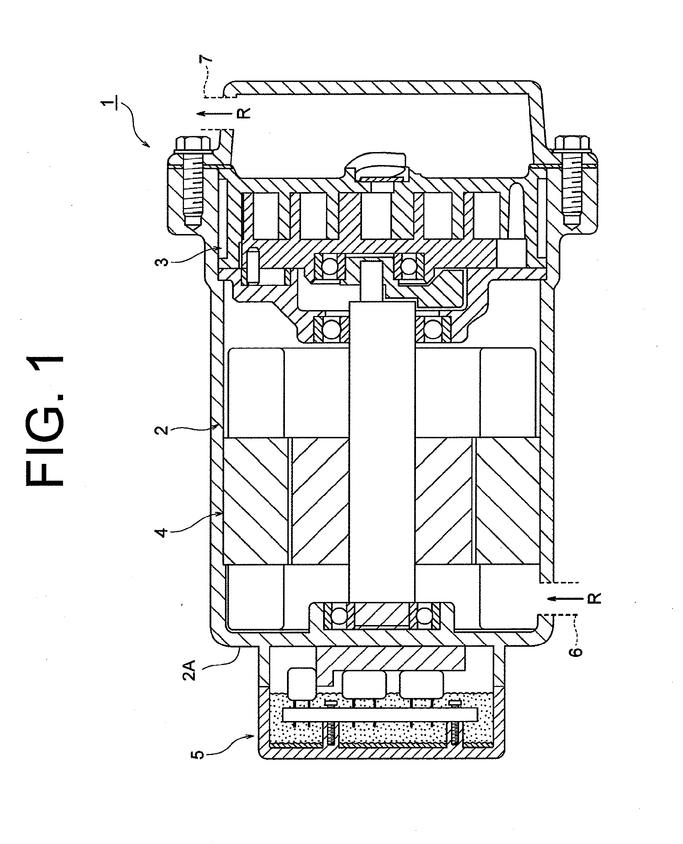

The following will describe the embodiments of the present invention with reference to the accompanying drawings. Referring to Fig. 1 showing the motor-driven compressor according to the first embodiment of the present invention in longitudinal sectional view, the motor-driven compressor 1 includes a housing 2 that accommodates a compression mechanism 3 and an electric motor 4. The compression mechanism 3 compresses a refrigerant R, and the electric motor 4 drives the compression mechanism 3. The motor-driven compressor 1 will be referred to merely as "compressor" 1 hereinafter. The compressor 1 further includes an inverter assembly 5 mounted on the surface 2A of the housing 2 for controlling the rotation of the electric motor 4.

The compressor 1 draws in low-temperature and low-pressure refrigerant R via an inlet 6 formed in the housing 2 and the electric motor 4 into the compression mechanism 3 for compression. Compressed high-temperature and high-pressure refrigerant R is discharged via an outlet 7 formed in the housing 2 out of the compressor 1. The inverter assembly 5 is mounted and fastened to the surface 2A of the housing 2 by any fastening members such as bolts (not shown) at a position that is adjacent to the passage through which the low-temperature and low-pressure refrigerant R flows.

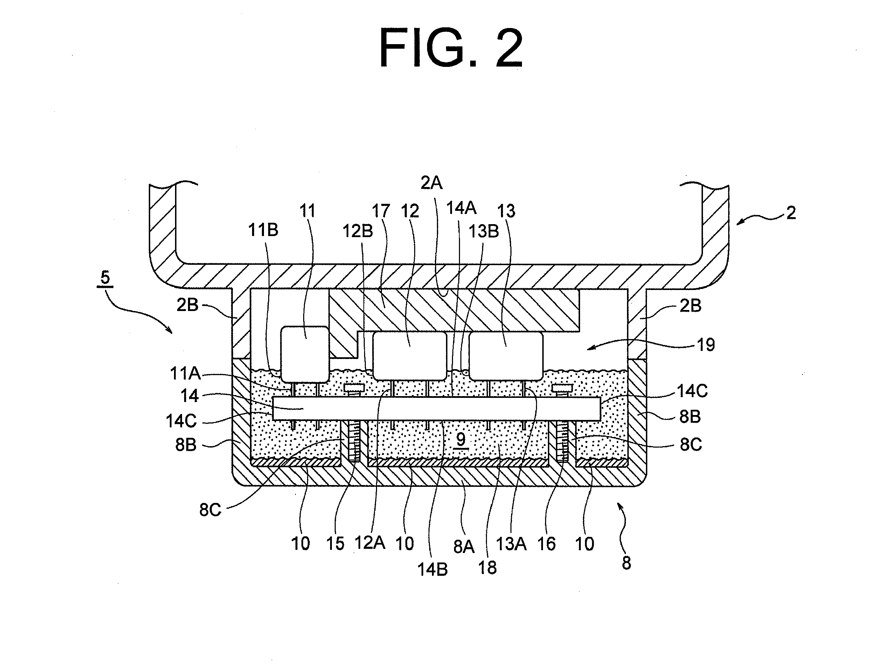

Referring to Fig. 2 showing the internal structure of the inverter assembly 5 in schematic sectional view, the inverter assembly 5 has a base member 8 with a base portion 8A and a sidewall portion 8B that are made of a heat conductive material such as aluminum. The sidewall portion 8B extends from the base portion 8A toward the housing 2. The base member 8 has therein a space 9 and an insulating sheet 10 that is attached to the bottom of space 9. The insulating sheet 10 serves to electrically insulate a circuit board 14 (to be described later) and the base member 8. The sidewall portion 8B of the base member 8 is joined to an extension 2B of the housing 2 so that the opening of the space 9 faces the surface 2A.

The aforementioned circuit board 14 on which electronic components 11-13 are mounted is disposed in the space 9 of the base member 8 and fixed by bolts 15 and 16 to projections 8C extending from the base portion 8A of the base member 8. The electronic components 11-13 form part of an inverter circuit of the inverter assembly 5.

The electronic components 11-13 are electronic elements such as switching device (e.g. insulated gate bipolar transistor (IGBT) and so forth), driver IC, capacitor, transformer or coil. The electronic components 11-13 in operation generate heat. The electronic components 11-13 are mounted on an upper surface 14A of the circuit board 14 that faces the surface 2A of the housing 2, as shown in Fig. 2. The electronic components 11-13 are located across a heat conductive member 17 from the housing 2, so that the electronic components 11-13 and the surface 2A of the housing 2 are in indirect contact with each other through the heat conductive member 17. The heat conductive member 17 is made of a heat conductive material such as aluminum.

An elastic member 18 having heat conductivity is located in the space 9, or between a lower surface 14B of the circuit board 14 that faces the base portion 8A of the base member 8 and the insulating sheet 10, between a side surface 14C of the circuit board 14 and the sidewall portion 8B of the base member 8, and also over the upper surface 14A of the circuit board 14 so that lead-wires 11A-13A of the electronic components 11-13 and parts 11 B-13B of the electronic components 11-13 adjacent to the circuit board 14 are embedded in the elastic member 18. Thus, each of the electronic components 11-13 is partly embedded in the elastic member 18.

The elastic member 18 is made of a material that is fluid initially but cured over time, such as silicone. Fluid silicone is poured into the space 9 in assembling the inverter assembly 5. The silicone thus poured is cured over time into a gel having elasticity.

The sidewall portion 8B of the base member 8 extends beyond an imaginary plane that includes the upper surface 14A of the circuit board 14 and toward the housing 2, so that the poured silicone or the elastic member 18 is prevented from flowing out of the space 9 and that a space 19 is formed between the exposed surface of the poured silicone and the surface 2A of the housing 2.

In the above-described inverter assembly 5, the heat generated by the electronic components 11-13 during the operation of the compressor 1 is transferred to the surface 2A of the housing 2 via the heat conductive member 17. In the present embodiment wherein the inverter assembly 5 is mounted on the surface 2A adjacent to the passage through which low-temperature and low-pressure refrigerant R drawn into the compression mechanism 3 flows, the heat transferred to the surface 2A of the housing 2 is radiated from the surface 2A. The heat transferred from the electronic components 11-13 to the circuit board 14 is further transferred to the base member 8 via the elastic member 18 covering the entire area of the circuit board 14. Thus, the heat is also radiated from the base member 8.

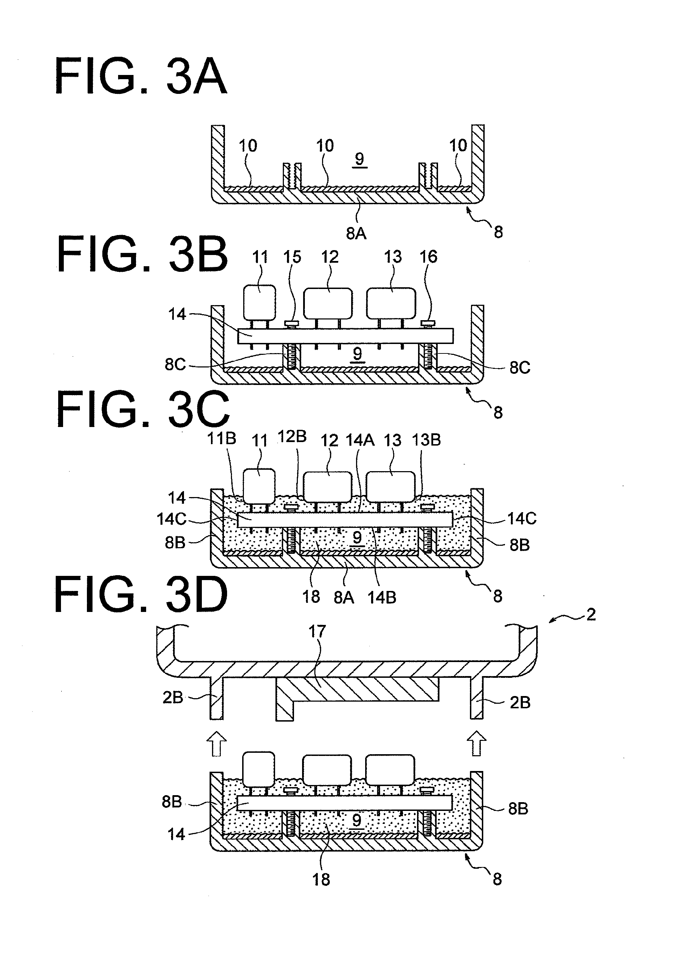

The following will describe in detail a method of assembling the inverter assembly 5 and a method of mounting the inverter assembly 5 on the housing 2, with reference to Figs. 3A through 3D. To begin with, the insulating sheet 10 is attached to the bottom of the space 9 of the base member 8, as shown in Fig. 3A. The circuit board 14 having the electronic components 11-13 is then fixed to the projections 8C of the base member 8 by bolts 15 and 16, as shown in Fig. 3B. Subsequently, fluid silicone is poured into the space 9 so as to be filled between the lower surface 14B of the circuit board 14 and the insulating sheet 10, between the side surface 14C of the circuit board 14 and the sidewall portion 8B of the base member 8, over the upper surface 14A of the circuit board 14, and also over the parts 11 B-13B of the electronic components 11-13, as shown in Fig. 3C. The poured silicone is allowed to cure over time into a gel state. Since the sidewall portion 8B of the base member 8 extends beyond the imaginary plane that includes the upper surface 14A of the circuit board 14 and toward the housing 2, the poured silicone is prevented from flowing out of the space 9. After the silicone becomes cured into an elastic gel, the base member 8 is joined at the sidewall portion 8B thereof to the extension 2B of the housing 2, as shown in Fig. 3D. Thus, the inverter assembly 5 is mounted on the housing 2.

As described above, in the inverter assembly 5 of the compressor 1 according to the first embodiment, the elastic member 18 having heat conductivity is located between the lower surface 14B of the circuit board 14 and the insulating sheet 10, between the side surface 14C of the circuit board 14 and the sidewall portion 8B of the base member 8, over the upper surface 14A of the circuit board 14, and also over the parts 11B-13B of the electronic components 11-13. The electronic components 11-13 and the circuit board 14 are covered by the elastic member 18 before the inverter assembly 5 is mounted on the housing 2 in the assembling of the compressor 1. Therefore, attachment of foreign matters to the electronic components 11-13 and to the circuit board 14 during the assembling of the compressor 1 is prevented. The circuit board 14 and the parts 11 B-13B of the electronic components 11-13 which are embedded in the elastic member 18 offer good resistance against the shock encountered in mounting the inverter assembly 5 on the housing 2. In addition, since the vibration transmitted from the compression mechanism 3 is absorbed by the elastic member 18 during the operation of the compressor 1, the damage to the electronic components 11-13 and the circuit board 14 is prevented.

The elastic member 18 is not provided throughout the entire space defined by the base member 8 and the housing 2, but the aforementioned space 19 is formed between the elastic member 18 and the surface 2A of the housing 2. Thus, the inverter assembly 5 needs only less amount of silicone for the elastic member 18 and, therefore, the time for the silicone to be cured and hence the time for assembling the inverter assembly 5 is shortened. If the elastic member 18 is provided throughout the entire space defined by the base member 8 and the housing 2, air holes need to be formed in the base member 8 against the pressure change in the space defined by the base member 8 and the housing 2 due to a rise of its temperature. In the first embodiment wherein the pressure change is absorbed by the space 19, however, it is not necessary to take such measures.

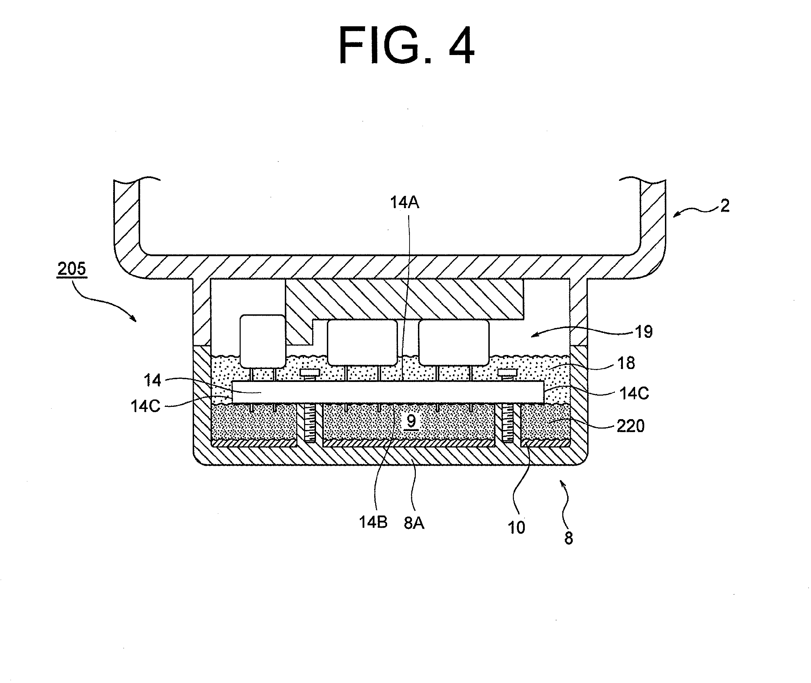

The following will describe the inverter assembly 205 of the motor-driven compressor according to the second embodiment of the present invention with reference to Fig. 4. In Fig. 4, same reference numerals of Fig. 2 are used for elements or components that are similar to their counterparts in the inverter assembly 5 of the compressor 1 according to the first embodiment, and the description of such elements or components for the second embodiment will be omitted.

In the inverter assembly 205 of the second embodiment, a first layer made of a material that is a gel in its initial state, such as αGEL (registered trademark), is used as an elastic member 220 located between the lower surface 14B of the circuit board 14 and the insulating sheet 10. In addition, a second layer made of a material that is fluid in its initial state as in the first embodiment is used as the elastic member 18 located between the side surface 14C of the circuit board 14 and the sidewall portion 8B of the base member 8 and also over the upper surface 14A of the circuit board 14.

In assembling the inverter assembly 205, the insulating sheet 10 and the elastic member 220 are formed at the bottom of the space 9 and then the circuit board 14 is fixed to the projections 8C of the base member 8, as shown in Fig. 4. A material that is fluid initially such as silicone is poured onto the upper surface 14A and the side surface 14C of the circuit board 14.

The inverter assembly 205 of the second embodiment that uses the first layer made of a material that is a gel in its initial state as the elastic member 220 disposed over the lower surface 14B of the circuit board 14 needs only less amount of the elastic member 18 than the inverter assembly 5 of the first embodiment. Thus, the elastic member 18 of the inverter assembly 205 needs only a shorter time to be cured than the elastic member 18 of the inverter assembly 5, so that the time taken to assemble the inverter assembly 205 is reduced.

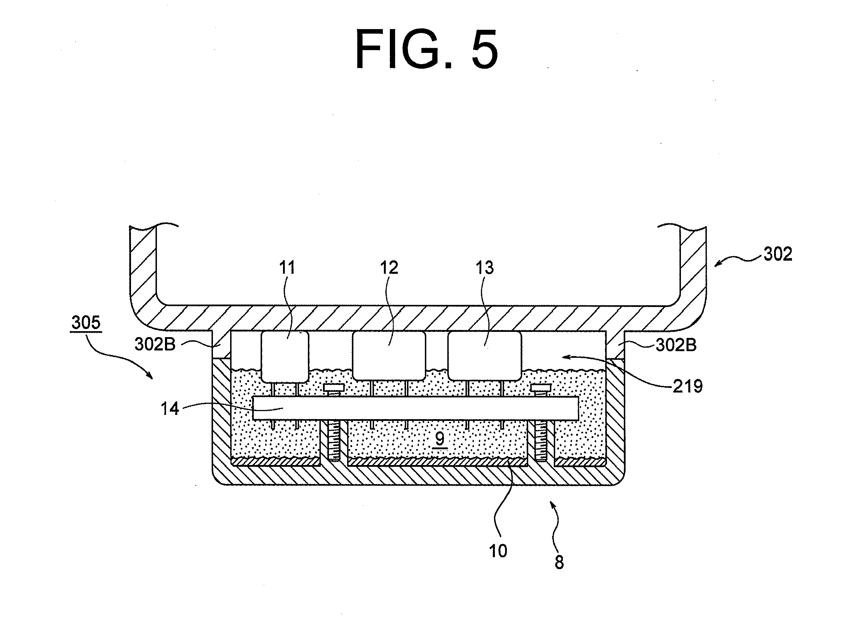

Although in the first and second embodiments the electronic components 11-13 mounted on the circuit board 14 are in indirect contact with the surface 2A of the housing 2 through the heat conductive member 17, the electronic components 11-13 may be arranged in contact with the surface 302A of the housing 302, as shown in Fig. 5.

In the first embodiment, the inverter assembly 5 may dispense with the insulating sheet 10 and the bolts 15 and 16 by making the elastic member 18 of a material having sufficient insulating property and strength. In the second embodiment, the inverter assembly 205 may dispense with the insulating sheet 10 and the bolts 15 and 16 by making the elastic member 220 of a material having sufficient insulating property and the elastic member 18 of a material having sufficient strength and adhesion.

A motor-driven compressor includes a housing, an inverter assembly and an elastic member. The inverter assembly has a base member, a circuit board and an electronic component. The base member has a base portion and a sidewall portion that extends from the base portion toward the housing and is mounted on the housing. The circuit board is disposed in a space of the base member. The electronic component is mounted on a surface of the circuit board adjacent to the housing. The sidewall portion extends beyond an imaginary plane including the surface of the circuit board. The elastic member having heat conductivity is located between the circuit board and the base portion, between the circuit board and the sidewall portion, and over the surface of the circuit board so that the circuit board is embedded in the elastic member. A space is formed between the elastic member and the housing.

## Claims

1. A motor-driven compressor (1) comprising:
a compression mechanism (3) compressing a refrigerant (R);
an electric motor (4) driving the compression mechanism (3);
a housing (2, 302) accommodating the compression mechanism (3) and the electric motor (4); and
an inverter assembly (5, 205) controlling rotation of the electric motor (4);
**characterized in that**
the inverter assembly (5, 205) has a base member (8), a circuit board (14) and an electronic component (11-13), the base member (8) has a base portion (8A) and a sidewall portion (8B) that extends from the base portion (8A) toward the housing (2, 302) and is mounted on the housing (2, 302), the base member (8) has therein a space (9), the circuit board (14) is disposed in the space (9) of the base member (8), the electronic component (11-13) is mounted on a surface (14A) of the circuit board (14) adjacent to the housing (2, 302), the sidewall portion (8B) of the base member (8) extends beyond an imaginary plane that includes the surface (14A) of the circuit board (14), an elastic member (18, 220) having heat conductivity is located between the circuit board (14) and the base portion (8A) of the base member (8), between the circuit board (14) and the sidewall portion (8B), and also over the surface (14A) of the circuit board (14) so that the circuit board (14) is embedded in the elastic member (18, 220), and a space (19) is formed between the elastic member (18, 220) and the housing (2, 302).

2. The motor-driven compressor (1) according to claim 1, **characterized in that** the electronic component (11-13) is partly embedded in the elastic member (18, 220).

3. The motor-driven compressor (1) according to claim 1 or 2, **characterized in that** the elastic member (18, 220) is made of a gel material.

4. The motor-driven compressor (1) according to any one of claims 1 through 3, **characterized in that** the elastic member (18, 220) has a first layer (220) located between the circuit board (14) and the base portion (8A) of the base member (8), and a second layer (18) located between the circuit board (14) and the sidewall portion (8B) and also over the surface (14A) of the circuit board (14).

5. The motor-driven compressor (1) according to any one of claims 1 through 4, **characterized in that** the electronic component (11-13) is in indirect contact with the housing (2) through a heat conductive member (17).

6. The motor-driven compressor (1) according to any one of claims 1 through 4, **characterized in that** the electronic component (11-13) is in contact with the housing (302).
